# FASCICULE DE BREVET EUROPEEN

(11) **EP 1 339 343 B1**
(45) Date de publication et mention de la délivrance du brevet: **15.10.2008**
(21) Numéro de dépôt: 01980590.2
(22) Date de dépôt: 08.10.2001
(51) Int. Cl.: A61C 5/02

(54) **SEQUENCE D'INSTRUMENTS CANALAIRES POUR L'EXECUTION D'UN PROTOCOLE OPERATOIRE D'ENDODONTIE**
WURZELKANALINSTRUMENT, SOWIE INSTRUMENTENSATZ DAFÜR
SEQUENCE OF CANAL INSTRUMENTS FOR EXECUTING AN ENDODONTIC OPERATIVE PROCEDURE

(30) Priorité: 29.11.2000 FR 0015388
(43) Date de publication de la demande: 03.09.2003
(73) Titulaire: MICRO MEGA INTERNATIONAL MANUFACTURES, 25000 Besançon (FR)
(72) Inventeur: BADOZ, Jean-Marie, F-25300 Doubs (FR)
(74) Mandataire: Poupon, Michel
(86) Numéro de dépôt international: PCT/FR2001/003092
(87) Numéro de publication internationale: WO 2002/043607

(56) Documents cités:
- EP-A- 0 501 255
- EP-A- 0 684 019
- US-A- 5 380 200

## Description

La présente invention a pour objet une séquence d'instruments canalaires pour l'exécution d'un protocole opératoire d'endodontie, du type comportant une pluralité, par exemple trois, instruments utilisés séquentiellement, lesdits instruments étant du type à trois lames de coupe, les instruments étant de conicité progressive telle que, par exemple, 6 %, 4 % et 2 % et ayant chacun un pas progressif identique.

On connaît déjà des séquences d'instruments canalaires de ce type, comme par exemple décrit dans EP 0684 019.

Les instruments à pas progressif sont tels que le pas augmente de l'apex vers le manche, ce qui évite le vissage de l'instrument dans la dent en cas de notation continue.

L'augmentation du pas entraîne une réduction de l'âme résiduelle de l'instrument, donc augmente sa fiabilité.

Il en découle une flexibilité acceptable pour une conicité de 2 %, mais des flexibilités de plus en plus réduites au fur et à mesure de l'augmentation de la conicité.

Conformément à l'invention, on propose de résoudre ce problème en prévoyant une séquence d'instruments canalaires pour l'exécution d'un protocole opératoire d'endodontie, comportant une pluralité, par exemple trois, instruments utilisés séquentiellement, lesdits instruments étant du type à trois lames de coupe, les instruments étant de conicité progressive et ayant chacun un pas progressif identique caractérisée en ce que le pas augmente progressivement en fonction de la conicité.

Avantageusement cette conicité progressive sera de 6 %, 4 %, et 2 %.

Ainsi par exemple, mais non limitativement, on pourra prévoir :
- un pas x pour une conicité de 2 %
- un pas 1.5x pour une conicité de 4 %
- un pas 2x pour une conicité de 6 %
   ceci en conservant pour chaque instrument la progressivité du pas augmentant de l'apex vers le manche.

Ceci permet dans certains cas de simplifier la séquence opératoire, pour des canaux simples, en supprimant un instrument à canaux par exemple en amenant un instrument à conicité de 4 % jusqu'à l'apex.

## Revendications

1. Séquence d'instruments canalaires pour l'exécution d'un protocole opératoire d'endodontie, comportant une pluralité, par exemple trois, instruments utilisés séquentiellement, lesdits instruments étant du type à trois lames de coupe, les instruments étant de conicité progressive et ayant chacun un pas progressif identique **caractérisée en ce que** le pas augmente progressivement en fonction de la conicité.

2. Séquence d'instruments canalaires selon la revendication 1, **caractérisée en ce que** la conicité progressive est de 6 %, 4 %, et 2 %.

3. Séquence d'instruments canalaires selon l'une quelconque des revendications 1 et 2, **caractérisée en ce que** les pas sont les suivants :
- un pas x pour une conicité de 2 %,
- un pas 1.5x pour une conicité de 4 %,
- un pas 2x pour une conicité de 6 %,
la progressivité du pas de chaque instrument augmentant de l'apex vers le manche.

## Claims

1. Sequence of root canal instruments for performing an endodontic operating protocol, comprising a plurality, for example three, instruments used sequentially, said instruments being of the type with three cutting edges, the instruments having a progressive rate of taper and each having an identical progressive pitch, **characterised in that** the pitch increases progressively as a function of the rate of taper.

2. Sequence of root canal instruments according to Claim 1, **characterised in that** the progressive rate of taper is 6%, 4% and 2%.

3. Sequence of root canal instruments according to either one of Claims 1 and 2, **characterised in that** the pitches are as follows:
- a pitch x for a rate of taper of 2%
- a pitch 1.5x for a rate of taper of 4%
- a pitch 2x for a rate of taper of 6%
the progressiveness of the pitch of each instrument increasing from the tip to the handle.

## Patentansprüche

1. Satz von Kanalinstrumenten für die Durchführung eines Protokolls zur Zahnwurzelbehandlung, aufweisend mehrere, z. B. drei, Instrumente zum aufeinanderfolgenden Gebrauch, wobei diese Instrumente von der Art mit drei Schneidmessern sind und wobei die Instrumente eine progressive Konizität besitzen und jedes Instrument eine identische progressive Steigung hat, **dadurch gekennzeichnet, dass** die Steigung sich in Abhängigkeit von der Konizität progressiv vergrößert.

2. Satz von Kanalinstrumenten nach Anspruch 1, **dadurch gekennzeichnet, dass** die progressive Konizität 6%, 4% und 2% beträgt.

3. Satz von Kanalinstrumenten nach einem der Ansprüche 1 und 2, **dadurch gekennzeichnet, dass** die Steigungen wie folgt sind:
eine Steigung x für die Konizität von 2%,
eine Steigung 1,5 x für die Konizität von 4%,
eine Steigung 2 x für die Konizität von 6%,
wobei die Progression der Steigung von jedem Instrument von der Spitze zum Schaft zunimmt.
